(19) 

**Europäisches Patentamt**
**European Patent Office**
**Office européen des brevets**

(11) **EP 2 206 760 B1**

(12) **EUROPEAN PATENT SPECIFICATION**

(45) Date of publication and mention
of the grant of the patent:
**19.12.2012 Bulletin 2012/51**

(51) Int Cl.:
*C09J 123/10* (2006.01)     *C09J 7/02* (2006.01)
*C09J 123/08* (2006.01)     *C09J 131/04* (2006.01)
*C09J 133/08* (2006.01)     *C09J 123/06* (2006.01)
*C09J 123/14* (2006.01)     *B32B 27/32* (2006.01)
*B32B 37/12* (2006.01)

(21) Application number: **08844712.3**

(22) Date of filing: **29.10.2008**

(86) International application number:
**PCT/JP2008/069619**

(87) International publication number:
**WO 2009/057624 (07.05.2009 Gazette 2009/19)**

(54) **PRESSURE-SENSITIVE ADHESIVE FILM OR SHEET**

DRUCKEMPFINDLICHES KLEBEBAND ODER -FOLIE

FILM OU FEUILLET ADHÉSIF SENSIBLE À LA PRESSION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **31.10.2007 JP 2007284444**
**31.10.2007 JP 2007284445**
**01.04.2008 JP 2008095477**
**14.04.2008 JP 2008104933**

(43) Date of publication of application:
**14.07.2010 Bulletin 2010/28**

(73) Proprietor: **Du Pont-Mitsui Polychemicals Co., Ltd.**
**Tokyo 105-7117 (JP)**

(72) Inventors:
• **AOYAMA, Masataka**
**Ichihara-shi**
**Chiba 299-0108 (JP)**

• **HIRONAKA, Yoshitaka**
**Ichihara-shi**
**Chiba 299-0108 (JP)**
• **GONOHE, Hisao**
**Ichihara-shi**
**Chiba 299-0108 (JP)**

(74) Representative: **Gulde Hengelhaupt Ziebig & Schneider**
**Patentanwälte - Rechtsanwälte**
**Wallstrasse 58/59**
**10179 Berlin (DE)**

(56) References cited:
**EP-A1- 2 241 603          WO-A1-2005/075556**
**WO-A1-2006/090722     JP-A- 9 239 882**
**JP-A- 58 145 775          JP-A- 59 045 343**
**JP-A- 2005 033 000       JP-A- 2006 257 247**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field:

This invention relates to a laminated film or sheet obtained by forming an adhesive film or sheet having a proper initial adhesive force, suppressing an increase in the adhesive force after aging and maintaining a suitable and constant adhesive force for extended periods of time. The adhesive film or sheet of the invention can be favorably used for protecting the surfaces of articles.

Background Art:

Adhesive films or sheets have heretofore been widely used as surface protection films for protecting the surfaces of the products such as synthetic resin plates, face plates, metal plates and coated steel plates from the adhesion of dust, fouling and scratches, as films for protecting the surfaces of window glasses, as films for protecting the surfaces at the time of when an automobile is bake-finished or when a printed board is dipped in a solder, and as films for protecting the surfaces of precision electronic parts such as liquid crystal panel board, reflector plate, phase-contrast plate, prism sheet, optical guide board, polarizer board, plasma display panel board, thin organic fluorescent material film, transparent electrodes, flexible printed board and rigid printed board which are constituent members of liquid crystal display devices, plasma display devices and organic thin-film EL devices.

Generally, further, it has been desired that the adhesive film or sheet maintains a strong adhesion between the substrate and the adhesive layer yet maintaining a suitable degree of adhesive strength between the surface of a material being adhered and the adhesive layer, the suitable degree of adhesive strength being such that peeling does not take place by itself or by the application of a very slight degree of vibration or shocks and, when it is attempted to open or peel the sealing, smooth peeling is accomplished without leaving adhesive material on the surface of the material being adhered.

So far, ethylene/unsaturated ester copolymers such as ethylene/vinyl acetate copolymer and the like have, in many cases, been used as the adhesive layer for the films and sheets.

For example, JP-A-8-170056 discloses a surface protection film obtained by laminating an adhesive layer of an ethylene/vinyl acetate copolymer containing 18 to 26% by mass of a vinyl acetate on one surface of a substrate of a high-density polyethylene.

The ethylene/unsaturated ester copolymer such as ethylene/vinyl acetate copolymer or ethylene/(meth)acrylic ester copolymer, usually, exhibits a favorable initial adhesive force (stickiness) to the material being adhered.

The above ethylene/unsaturated ester copolymer, however, has such a defect that the adhesive force increases after aging and, particularly, the adhesive force greatly increases not only when it is transported or preserved in a state of being adhered to the material at normal temperature but also when it is subjected to various forms of thermal hysteresis, arousing problems at the time of peeling due to too strong adhesive force.

A countermeasure has already been proposed for suppressing the adhesive force of the ethylene/vinyl acetate copolymer from increasing after aged. For example, JP-A-2002-226814 proposes a resin composition obtained by blending an ethylene/vinyl acetate copolymer with a substantially amorphous propylene resin for use as an adhesive resin.

As compared to the conventional counterparts, the above resin composition suppresses an increase in the adhesive force after aging to a considerable degree, and is effective to a certain extent which, however, is not still satisfactory. In this field of art therefore, it has been urged to attain further improvements.

Further, the above resin composition has a slightly large initial adhesive force and cannot completely suppress an increase in the adhesive force after aging Depending upon the applications, therefore, the adhesive force becomes too strong, and the use is often limited.

In recent years, further, the adhesive films or sheets for protecting the surfaces must often have transparency, and increasing demands have been placed on the adhesive films and sheets that satisfy the above requirement.

WO 2005/075556 A discloses a resin composition to be used as an antistatic layer in a multi-layer article. The resin composition comprises a potassium ionomer, an ethylene-unsaturated ester copolymer and a thermoplastic resin. The unsaturated ester of the ethylene-unsaturated ester copolymer may comprise a vinyl ester such as vinyl acetate or an unsaturated carboxylic acid ester such as methyl acrylate. The thermoplastic resin may be an olefin homo- or copolymer such as high density polyethylene or crystalline polypropylene.

EP 2 241 603 A discloses a resin composition comprising 5 to 80 % of an olefin polymer, preferably a crystalline olefin homo- or copolymer or a propylene-based (co) polymer; 5 to 80 % of an ethylene/unsaturated ester copolymer, such as a copolymer of ethylene and vinyl acetate or a copolymer of ethylene and an alkyl ester; and 1 to 60 % of a styrene-based elastomer and/or olefin-based elastomer. The resin composition may be used in a multi-layer structure as a film or sheet.

Disclosure of the Invention:

Problems that the Invention is to Solve:

The present inventors have conducted keen study in an attempt to obtain an adhesive composition having a proper initial adhesive force, sufficiently suppressing an increase in the adhesive force after aging maintaining a suitable adhesive force nearly constantly despite of being subjected to thermal hysteresis to some extent or even after preserved for extended periods of time and, as desired, being capable of imparting a high degree of transparency to the adhesive film or sheet.

As a result, the inventors have unexpectedly discovered that the above requirement is satisfied by a mixed resin, i.e., by a resin composition comprising an ethylene/unsaturated ester copolymer such as ethylene/vinyl acetate polymer blended with a highly crystalline ethylene or propylene polymer or copolymer resin having a melting point in a predetermined amount, and have completed the invention based on this discovery.

It is, therefore, an object of the present invention to provide an adhesive film or sheet comprising a resin composition which has an initial adhesive force in a proper range and sufficiently suppresses an increase in the adhesive force after aging.

Another object of the present invention is to provide an adhesive film or sheet excellent in transparency.

A further object of the present invention is to provide a laminated adhesive film or sheet obtained by laminating, as an adhesive layer, a layer of the resin composition on a substrate.

A still further object of the present invention is to provide an adhesive film or sheet which can be favorably used for protecting the surfaces of articles.

Means for Solving the Problems:

According to the present invention, there is provided a laminated film or sheet obtained by forming an adhesive film or sheet of a mixed resin consisting of (A) an ethylene/unsaturated ester copolymer resin; (B) a highly crystalline ethylene or propylene polymer or copolymer resin having a melting point of not lower than 115°C; and optionally a tackifier selected from the group consisting of petroleum resins, namely aliphatic resins, aromatic resins, aliphatic/aromatic copolymer resins and alicyclic resins; and pinene resins; cumarone-indene resins; terpene resins; terpene-phenol resins; polymerized rosin resins; (alkyl)phenol resins; xylene resins; and hydrogenated resins thereof, on at least one surface of a substrate.

It is desired that the resin (A) comprises an ethylene/vinyl acetate copolymer or an ethylene/alkyl (meth)acrylate copolymer.

It is, further, desired that the resin (B) comprises a stereospecific propylene polymer having a melting point of not lower than 130°C since it makes it possible to provide a film or sheet that suppresses an increase in the adhesive force and exhibits proper adhesiveness, mechanical strength and transparency maintaining balance required for the surface protection films.

When the resin (B) is the propylene polymer or copolymer, it is desired that the mixed resin comprises 5 to 80% by mass of the resin (A) and 95 to 20% by mass of the resin (B). Here, the sum of (A) and (B) becomes 100% by mass.

Further, the resin (B) that comprises a high-density polyethylene having a density of 940 to 965 kg/m$^3$ is favorable for providing a film or sheet that suppresses an increase in the adhesive force and exhibits proper adhesiveness, mechanical strength and transparency maintaining balance required for the surface protection films. In this case, it is desired that the mixed resin comprises 10 to 70% by mass of the resin (A) and 90 to 30% by mass of the resin (B). Here, the sum of (A) and (B) becomes 100% by mass.

In the adhesive film or sheet of the invention, in particular, it is desired that the mixed resin layer has a fine texture structure in which lamellar phases of the resin (A) are overlapped one upon the other in many layers among the continuous phases in which the resin (A) is homogeneously dissolved in the resin (B) more strongly suppressing an increase in the adhesive force and offering excellent transparency.

It is desired that the mixed resin further contains a tackifier.

The invention provides a laminated film or sheet obtained by forming an adhesive film comprising the mixed resin on at least one surface of a substrate.

In particular, it is desired that the substrate comprises a polyethylene or a polypropylene, and the adhesive film is formed on at least one surface thereof.

The invention, further, provides a surface protection film or sheet comprising the above film or sheet.

Brief Description of the Drawing:

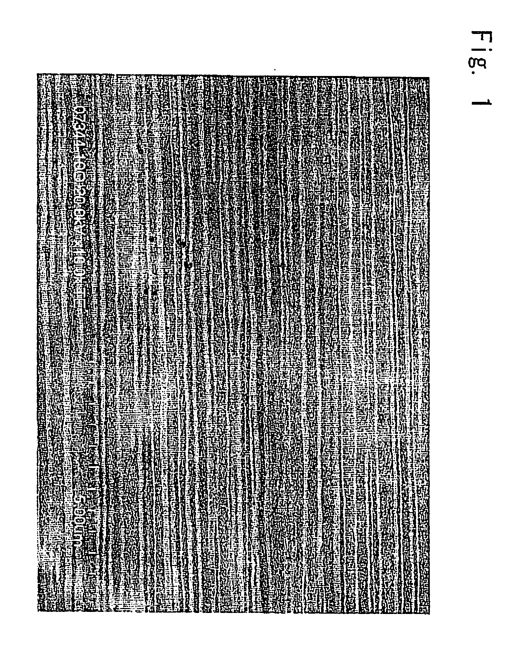

Fig. 1 is an electrophotograph showing a preferred fine texture structure of a mixed resin layer in the adhesive film of the invention (sectional electron microphotograph of the mixed resin layer in the machine direction).

Best Mode for Carrying Out the Invention:

Embodiment of the invention will now be described concretely and in detail.
As described already, the adhesive film or sheet of the invention has a feature in the constitution in that the adhesive layer comprises a mixed resin of an ethylene/unsaturated ester copolymer resin (A) and a highly crystalline ethylene or propylene polymer or copolymer resin (B) having a melting point of not lower than 115°C.

[Ethylene/unsaturated ester copolymer resin (A)]

As the ethylene/unsaturated ester copolymer that constitutes the resin (A) used as an essential resin component in the adhesive layer in the film or sheet of the invention, there can be used a copolymer of an ethylene and a vinyl ester such as vinyl acetate or vinyl propionate, or a copolymer of an ethylene and an alkyl ester of an unsaturated carboxylic acid having up to about 20 carbon atoms, such as acrylic acid, methacrylic acid, maleic acid, maleic anhydride, fumaric acid, itaconic acid or itaconic anhydride. More concretely, there can be exemplified a copolymer of an ethylene and an unsaturated carboxylic ester, such as methyl acrylate, ethyl acrylate, isopropyl acrylate, n-propyl acrylate, isobutyl acrylate, n-butyl acrylate, 2-ethylhexyl acrylate, methyl methacrylate, ethyl methacrylate, isobutyl methacrylate, n-butyl methacrylate, glycidyl methacrylate, dimethyl maleate or diethyl maleate.

In addition to the above bipolymers, there can be, further, used multipolymers obtained by copolymerizing the ethylene with two or more kinds of the above unsaturated esters, as well as those copolymerized with small amounts of other polar monomers such as acrylic acid, methacrylic acid, maleic acid, itaconic acid, maleic anhydride, itaconic anhydride or carbon monoxide so far as they do not substantially vary various properties such a flexibility, elasticity, heat-sealing property, etc. that are possessed by the unsaturated ester copolymer.

Among them, it is desired according to the present invention to use an ethylene/vinyl ester copolymer such as ethylene/vinyl acetate copolymer; an ethylene/unsaturated lower alkyl carboxylate copolymer such as ethylene/methyl (meth)acrylate copolymer, ethylene/ethyl (meth)acrylate copolymer or ethylene/butyl (meth)acrylate copolymer; and, particularly, the ethyllene/vinyl acetate copolymer and the ethylene/lower alkyl (meth)acrylate copolymer produced by a tubular polymerization method.

According to the present invention, among the above ethylene/unsaturated esters, it is desired to those the one containing the unsaturated ester units in an amount of 3 to 46% by weight and, particularly, 7 to 33% by weight.
If the content of the unsaturated ester units is in the above range, favorable compatibility is obtained for the highly crystalline resin (B) and, particularly, for the propylene (co)polymer, and the obtained adhesive composition exhibits excellent mechanical properties, heat resistance and flexibility.

It is, further, desired that the ethylene/unsaturated ester copolymer used in the invention has a melt flow rate (190°C, load of 2160 g: in compliance with the JIS K7210-99, 190°C, load of 2160 g) in a range of 2 to 50 g/10 min. and, particularly, 3 to 20 g/10 min. from the standpoint of adhesive sealing strength and workability of the obtained composition.

The above ethylene/unsaturated ester copolymer can be obtained by radically copolymerizing the ethylene with the unsaturated ester at a high temperature under a high pressure.
For example, there can be used a favorably random copolymer produced by a high-pressure radical polymerization process based on an ordinary autoclave method. The above ethylene/unsaturated carboxylic ester copolymer, however, is, particularly preferably, the one produced by the high-pressure radical polymerization process based on a tubular method.

[Highly crystalline ethylene or propylene polymer or copolymer resin (B)]

The mixed resin layer in the adhesive film or sheet of the present invention uses, as another essential resin component, a highly crystalline ethylene or propylene polymer or copolymer resin (B) having a melting point of not lower than 115°C. As the above polymer or copolymer resin, there can be exemplified a stereospecifically polymerized polypropylene such as high-density polyethylene or isotactic polypropylene, or highly crystalline propylene copolymer.
The high-density polyethylene having a melting point of not lower than 115°C preferably used in the invention may be an ethylene homopolymer or the one chiefly comprising an ethylene which is, further, copolymerized with an $\alpha$-olefin having 3 to 12 carbon atoms, and the like. The high-density polyethylene having a melting point of not lower than 115°C is, usually, produced by an intermediate-pressure method (30 to 70 atms., Phillips method, Standard method, etc.) or a low-pressure method (normal pressure or slightly elevated pressure, Ziegler method, etc.).
Further, the invention preferably uses the polyethylene having a density of 940 to 965 kg/m$^3$ and, particularly, 946 to 960 kg/m$^3$. From the standpoint of maintaining the initial adhesive force of the adhesive layer in a proper range and suppressing an increase in the adhesive force after aged, in particular, it is desired that the high-density polyethylene has a bending modulus of elasticity (as measured in compliance with the JIS K7171) of not larger than 1000 MPa and, more preferably, in a range of 600 to 900 MPa.

As will be clearly understood from Examples and Comparative Examples appearing later, polyethylenes having densities of not higher than 940, e.g., low-density polyethylenes are not capable of suppressing an increase in the adhesive strength which is aimed at by the present invention.

The high-density polyethylene desirably has a melt flow rate (MFR) (in compliance with the JIS K7210, 190°C, load of 2160 g) of 0.5 to 20 g/10 min. and, particularly, 1 to 15 g/10 min.

In the present invention, the propylene (co)polymer (B) stands for a homopolymer of propylene or a copolymer of propylene containing not less than 50 mol% of a propylene component and other monomer.

The present invention uses the propylene (co) polymer (B) having a melting point of not lower than 115°C, preferably, not lower than 130°C and, more preferably, not lower than 135°C. Though there is no particular limitation on the upper limit of the melting point, it is allowable to use the crystalline propylene (co)polymer having a melting point of, for example, 165°C.

As a representative example of the crystalline propylene (co)polymer, there can be used a stereospecific polymer such as isotactic polypropylene or the like.

As the propylene (co)polymer (B) used in the invention, there can be used, for example, a crystalline propylene homopolymer (polypropylene homopolymer) having a melting point of not lower than 130°C, a random copolymer comprising chiefly propylene, or block copolymer thereof or, more concretely, a random copolymer containing not less than 50 mol% and, preferably, not less than 80 mol%, of a propylene component and not more than 50 mol% and, particularly, not more than 20 mol% of monomer components other than the propylene, or a block copolymer thereof.

As the other monomer components, there can be exemplified a-olefins having 2 or 4 to 20 carbon atoms and, particularly preferably, 2 or 4 to 8 carbon atoms, such as ethylene, 1-butene, 1-pentene, 1-hexene, 1-octene, 1-decene, 1-dodecene, 1-tetradecene and 1-octadecene.

Among the propylene (co)polymers (B) according to the present invention, it is particularly desired to use the one that has an amount of latent heat (amount of heat of fusion) (measured in compliance with the JIS K7122) obtained from an endothermic peak at a melting point as measured by using a differential scanning calorimeter (DSC) in a range of 10 to 120J/g and, particularly, 30 to 110 J/g.

Further, when the propylene (co)polymer (B) is a propylene copolymer, a random copolymer is more preferred.

It is, further, desired that the propylene (co)polymer (B) has a melt flow rate (MFR) (in compliance with the JIS K7210, 230°C, a load of 2160 g) of 1 to 60g/10 min. and, particularly, 2 to 30 g/10 min.

[Adhesive mixed resin]

The present invention uses, as the adhesive resin layer, a mixed resin of the ethylene/unsaturated ester copolymer resin (A) and the highly crystalline ethylene or propylene polymer or copolymer resin (B) having a melting point of not lower than 115°C. The blending ratio is, desirably, 5 to 80% by mass of the resin (A) and 95 to 20% by mass of the resin (B). Here, the sum of (A) and (B) is 100% by mass.

If the resin (B) component is blended in an amount of not higher than 20% by mass, the adhesive resin composition cannot effectively exhibit the effect of suppressing an increase in the adhesive force after aging as contemplated by the invention.

If its amount exceeds 95% by mass, on the other hand, the initial adhesive force becomes insufficient depending upon the kind of the material to be adhered, and the effect as a surface protection film is not exhibited to a sufficient degree.

Further, if the resin (B) component is the ethylene (co)polymer, the blending ratio is such that the amount of the resin (A) is 10 to 70% by mass and the amount of the resin (B) is 30 to 90% by mass, preferably, the amount of (A) is 30 to 60% by mass and the amount of (B) is 70 to 40% by mass and, more preferably, the amount of (A) is 30 to 50% by mass and the amount of (B) is 70 to 50% by mass.

If the resin (B) component is the propylene (co)polymer, the blending ratio is such that the amount of the resin (A) is 10 to 75% by mass and the amount of the resin (B) is 90 to 25% by mass and, preferably, the amount of (A) is 30 to 50% by mass and the amount of (B) is 70 to 50% by mass.

In the film and sheet of the present invention, further, it is particularly desired that the adhesive mixed resin layer has a particular fine texture structure as described below.

That is, the fine texture structure is the one in which lamellar phases of the resin (A) are overlapped one upon the other in may layers among the continuous phases in which the resin (A) is homogeneously dissolved in the resin (B). Referring to the accompanying Figure 1 which is an electron microphotograph which is a sectional view of the film or sheet as viewed from the machine direction, the lamellar resin (A) layers are overlapped in many layers maintaining a small gap in a homogeneously molten layer (continuous layer) of the resins (A) and (B) constituting a structure like that of a mille-feuille (napoleon) pie.

The film or sheet having the adhesive layer of the above fine texture structure effectively suppresses an increase in the adhesive force after aging and excellently maintains a proper and constant adhesive force for extended periods of time.

The adhesive mixed resin (resin composition) layer in the film or sheet of the invention may be, further, blended with a tackifier to improve the initial adhesiveness, and the blending amount thereof is, preferably, 0 to 30 parts by mass and, particularly, 0 to 20 parts by mass per 100 parts by mass of the sum of the resins (A) and (B).

The tackifier to be added to the adhesive mixed resin is selected from the group consisting of petroleum resins, namely aliphatic resin, aromatic resin, aliphatic/aromatic copolymer resin or alicyclic resins, or pinene resin, cumarone-indene resin, terpene resin, terpene-phenol resin, polymerized rosin resin, (alkyl)phenol resin, xylene resin or hydrogenated resins thereof.

Blends of the tackifiers and the olefin resins have also been placed in the market, and may be used in the present invention.

The adhesive mixed resin (resin composition) of the invention can be obtained by dry-blending or melt-blending the above resin components (A) and (B) and, as required, the tackifier simultaneously or successively.

The dry-blending can be conducted by using various mixers such as Henschel's mixer or tumbler mixer.

The melt-blending can be conduced by using a single or twin extruder, Banbury's mixer, or a kneading machine such as roll kneader, and effecting the melt-kneading at a temperature of about 140 to 230°C.

In the present invention, there is no particular limitation on the mixed state of the resin components (A) and (B). As described already, however, it is desired that the resin components (A) and (B) are at least partly incompatible and the component (A) is dispersed like lamellae in the compatible components of the resins (A) and (B).

When formed into a film, the resin composition obtained by the invention has an initial adhesive force of 0.3 to 100 g/25mm as generally desired and, particularly preferably, 0.5 to 30 g/25mm, and permits the adhesive force to increase at a ratio of 75% or less, preferably, 65% or less and, particularly, as very small as 45% or less, and a stable adhesive force (sticking force) is obtained after aging.

The adhesive film or sheet of the invention is used in a form in which an adhesive layer comprising the above resin composition is formed on at least one surface of the substrate.

As the substrate for forming the adhesive layer, though there is no particular limitation, there can be used, for example, a stretched or unstretched block or random propylene polymer using a polyester, polyamide, polypropylene or ethylene component as a copolymerizable component; an ethylene polymer such as low-density polyethylene, high-density polyethylene, linear low-density or ultra-low-density polyethylene; various thermoplastic resin films or sheets using one or two or more kinds of olefin polymers such as ethylene/propylene copolymer; as well as paper, metal foil and nonwoven fabric.

Among them according to the present invention, it is particularly desired to use the ethylene polymer such as polypropylene or polyethylene as the substrate.

When the substrate comprising the ethylene polymer such as polypropylene or polyethylene is used, a favorable interlayer adhesion is attained relative to the adhesive layer and, besides, the obtained film or sheet features excellent transparency.

When a thermoplastic film is used as the substrate, there can be added, for example, an antioxidant and an ultraviolet ray absorber, a photo stabilizer such as hindered amine photo stabilizer and antistatic agent for preventing deterioration and, as required, fillers such as carbon black, calcium oxide, magnesium oxide, silica, zinc oxide or titanium oxide, as well as additives such as pigment and the like.

The substrate has a thickness of about 1 to about 500 $\mu$m and, preferably, 10 to 200 $\mu$m though there is no particular limitation.

The adhesive layer can be formed by a known method of producing an adhesive sheet, such as a solution-coating method which applies a solution of a solvent in which the adhesive is dissolved or a hot melt thereof onto the substrate, a method which transfers an adhesive layer that is applied or formed on a separator substrate based on the above method, a hot melt-coating method which extrudes and applies the adhesive layer-forming material onto the support substrate, a method which coextrudes the substrate and the adhesive layer into two layers, three layers or more layers in the form of films, a method of extruding the adhesive layer as a single layer and laminating it on the substrate, a method of extruding an adhesive layer and a sticking layer in two layers and laminating them one upon the other, or a method of thermally laminating an adhesive layer and a substrate-forming material such as a film or a layer to be laminated.

Among the above production methods, it is desired to employ a method which coextrudes the adhesive layer together with the substrate of the thermoplastic resin into two layers, three layers or more layers relying on the inflation method or the T-die method.

In the invention, the adhesive layer formed on the substrate is determined for its thickness depending upon the adhesive force or the like and, usually, has a thickness of 1 to 250 $\mu$m and, preferably, 5 to 100 $\mu$m.

In the case of the single adhesive film or sheet without the substrate, the thickness is 5 to 300 $\mu$m and, preferably, 10 to 200 $\mu$m.

The adhesive film or sheet of the present invention has an initial adhesive force lying in a range that is considered to be particularly preferred for the surface protection films, i.e.,, has the initial adhesive force in a range of 0.5 to 30 g/25 mm, sufficiently suppressing an increase in the adhesive force after aging (ratio of increase in the adhesive force is, desirably, not larger than 65%), and maintains a suitable degree of adhesive force in a proper range despite it is subjected to the thermal hysteresis to some extent or even after it is preserved for extended periods of time.

According to the present invention, further, the resins (A), (B) and the blending ratio thereof are suitably selected to impart a high degree of transparency to the film or sheet.

Therefore, the adhesive film or sheet of the invention can be particularly favorably used for protecting the surfaces of products, such as synthetic resin plates, face plates, metal plates and coated steel plates, for protecting the surfaces of window glasses, for protecting the surfaces at the time of bake-finishing automobiles or dipping the printed boards in the solder, and for protecting the surfaces of precision electronic parts such as liquid crystal panel board, reflector plate, phase-contrast plate, prism sheet, optical guide board, polarizer plate, plasma display panel board, thin organic fluorescent material film, transparent electrodes, flexible printed board and rigid printed board which are constituent members of liquid crystal display devices, plasma display devices and organic thin-film EL devices.

EXAMPLES

The invention will now be concretely described by way of Examples to which only, however, the invention is in no way limited.

[Starting resins for the mixed resin (resin composition) layer]

(1) Resins used as the ethylene/unsaturated ester copolymer resin (A).

(A1) Ethylene/vinyl acetate copolymer:

Vinyl acetate content, 24% by mass (JIS K7192-1999), MFR 4 g/10 min. (JIS K7210-1999, 190°C, a load of 2160 g)

(A2) Ethylene/vinyl acetate copolymer:

Vinyl acetate content, 10% by mass (JIS K7192-1999), MFR 3 g/10 min. (JIS K7210-1999, 190°C, a load of 2160 g)

(A3) Ethylene/vinyl acetate copolymer:

Vinyl acetate content, 14% by mass (JIS K7192-1999), MFR 3.5 g/10 min. (JIS K7210-1999, 190°C, a load of 2160 g)

(A4) Ethylene/n-butyl acrylate copolymer:

n-Butyl acrylate content, 17% by mass (JIS K7192-1999) MFR 7 g/10 min. (JIS K7210-1999, 190°C, a load of 2160 g), produced by the tubular polymerization method.

(A5) Ethylene/vinyl acetate copolymer:

Vinyl acetate content, 10% by mass (JIS K7192-1999) MFR 9 g/10 min. (JIS K7210-1999, 190°C, a load of 2160 g)

(2) Resins used as the ethylene or propylene high crystalline (co)polymer (B).

(B1) High-density polyethylene:

Trade name, Hi-Zex 3300F (produced by Prime Polymer Co.) density, 950 kg/m$^3$, melting point, 132°C, bending modulus of elasticity, 780 MPa, MFR 1.1 g/10 min. (JIS K7210-1999, 190°C, a load of 2160 g)

(B2) Propylene copolymer:

Crystalline propylene/$\alpha$-olefin copolymer, melting point, 139°C, amount of latent heat (endothermic amount) (in compliance with the JIS K7122) obtained from a DSC endothermic peak of 86 J/g, MFR, 7.3 g/10 min. (JIS K7210-1999, 230°C, a load of 2160 g), trade name; Prime Polypro F327 (produced by Prime Polymer Co.)

(B3) Polypropylene polymer:

Crystalline homopolypropylene resin, melting point, 161°C, amount of latent heat (endothermic amount) (in compliance with the JIS K7122) obtained from a DSC endothermic peak of 110 J/g, MFR (JIS K7210-1999, 230°C, a load of 2160 g) of 3.0 g/10 min. (JIS K7210-1999, 230°C, a load of 2160 g), trade name; Prime Polypro F113G (produced by Prime Polymer Co.)

[Evaluated items and methods]

In order to decrease the effect of dispersion in the measurement in the following evaluation, measurements were taken five times, and the measured values of three times excluding the maximum values and minimum values were used as average values.

*Stiffness (loop stiffness).

Measured by using a loop tester manufactured by Toyo Seiki Co., at a span of 100 mm, a width of 25 mm and a push-in distance of 15 mm.

*Optical properties.

Haze = in compliance with the JIS K7136.
Gloss = in compliance with the JIS K7105.
Transmission factor for all light rays = in compliance with the JIS K7361.

*Adhering properties.

Adhesion to an acrylic board:

A sample film of an adhesive composition and an acrylic board were stuck together under the application of pressure of 2 kg by reciprocally moving a manual roller two times, and were peeled off at a take-up speed of 300 mm/min. at an angle of 180 degrees to evaluate the initial adhesive force, adhesive force after aged and an increase in the adhesive force in compliance with the JIS Z0237.

*Initial adhesive force:

Measured after the stuck test board was left to stand at a constant temperature and a constant humidity (23°C x 50%RH (relative humidity)) for 30 minutes.

*Adhesive force after aging (adhesive force after the passage of time):

Test pieces prepared for evaluating the adhesive properties were put into an oven and were aged for predetermined periods of time at temperatures as described below.
The samples taken out from the oven were left to stand at a constant temperature and a constant humidity (23°C x 50%RH), and were measured for their adhesive forces after 30 minutes have passed.

Aging condition 1: oven temperature, 40°C x 24 hours
Aging condition 2: oven temperature, 60°C x 3 hours
Aging condition 3: oven temperature, 40°C x 3 days
Aging condition 4: oven temperature, 60°C x 1 day
Aging condition 5: oven temperature, 60°C x 7 days

*Increase in the adhesive force: .

$$\text{Ratio of increase (\%)} = [(\text{adhesive force after aging} - \text{initial adhesive force})/\text{initial adhesive force}] \times 100$$

The larger the numerical value, the larger the change in the adhesive force after aging and the initial adhesive force is not maintained.

Though the following experiments use the polyethylene as the substrate, the same results are obtained even by using the polypropylene. The results described below are when the polyethylene is used as a representative example of the substrate.

[Example 1]

42 Parts by mass of an ethylene/vinyl acetate copolymer (A1) and 58 parts by mass of a high-density polyethylene (B1) were melt-kneaded together by using a 65 mmφ extruder at 200°C to obtain an adhesive resin composition.

By using an extrusion cast molding machine (65 mmφ), the resin composition was extruded onto a parting film of a polyethylene terephthalate (PET), and was cut into a film of a predetermined size. The parting film was peeled off, and a sample film was obtained (total thickness, 90 μm).

The sample film was evaluated for its properties concerning the items shown in Table 1 . The results were as shown in Table 1.

[Example 2]

38 Parts by mass of the ethylene/vinyl acetate copolymer (A1) and 52 parts by mass of the high-density polyethylene (B1) were mixed together. To 90 parts by mass of the sum of (A1) and (B1), further, there was added 10 parts by mass of an ethylene/vinyl acetate copolymer (A3) containing 13% by mass of a tackifier [hydrogenated aromatic hydrocarbon resin (softening point of 90°C as measured by the ring and ball test). The mixture was melt-kneaded together by using the same apparatus under the same conditions as those of Example 1 to obtain an adhesive resin composition.

The resin composition was extruded in the same manner as in Example 1 and was cut into a film of a predetermined size. Thereafter, the parting film was peeled off, and a sample a film was obtained (total thickness, 90 μm).

The sample film was evaluated for its properties in the same manner as in Example 1 . The results were as shown in Table 1.

[Comparative Example 1]

A low-density polyethylene [density, 923 kg/m$^3$; melting point, 110°C; MFR, 4.5 g/10 min.; endothermic amount as measured by DSC, 141 J/g, trade name, Mirason 16SPO produced by Prime Polymer Co.] was used instead of the high-density polyethylene (B1) used in Example 1. 58 Parts by mass of the above low-density polyethylene and 42 parts by mass of the ethylene/vinyl acetate copolymer (A1) were mixed together, and were melt-kneaded by using the same apparatus under the same conditions as those of Example 1 to obtain an adhesive resin composition.

The resin composition was extruded by using the extrusion cast molding apparatus in the same manner as in Example 1, and was cut into a film of a predetermined size. The parting film was peeled off, and a sample film was obtained (total thickness, 90 μm).

The sample film was evaluated for its properties in the same manner as in Example 1. The results were as shown in Table 1.

[Comparative Example 2]

The low-density polyethylene used in Comparative Example 1 was extruded onto a PET parting film, cut into a film of a predetermined size, and the parting film was peeled off to obtain a sample film (total thickness, 90 μm).

The sample film was evaluated for its properties in the same manner as in Example 1. The results were as shown in Table 1.

[Comparative Example 3]

An ethylene/vinyl acetate copolymer (A5) containing the vinyl acetate in the same amount as the total amount of 10% by mass of the vinyl acetate in the composition of Example 1, was extruded onto the PET parting film, cut into a film of a predetermined size, and the parting film was peeled off to obtain a sample film (total thickness, 90 $\mu$m).
The sample film was evaluated for its properties in the same manner as in Example 1. The results were as shown in Table 1.
Table 1

| Example (Comp. Ex.) | Ex. 1 | Ex. 2 | Comp. Ex. 1 | Comp. Ex. 2 | Comp. Ex. 3 |
|---|---|---|---|---|---|
| Adhesive properties | | | | | |
| Initial adhesive force (g/25 mm) | 7.5 | 8.1 | 4.9 | 3.9 | 8.2 |
| Adhesive force after aging (aging condition 1) | 9.5 | 8.1 | 9.8 | 2.1 | 15.2 |
| Ratio of increase (%) | 27 | 0 | 100 | -46 | 85 |
| Adhesive force after aging (aging condition 2) | 12 | 10.5 | 16.3 | *1 | 22.1 |
| Ratio of increase (%) | 60 | 30 | 233 | - | 170 |
| Loop stiffness (mN) | | | | | |
| MD after 1 min. | 8.1 | - | 5.8 | 4.3 | 3.7 |
| TD after 1 min. | 4.7 | - | 5.8 | 2.7 | 3.5 |
| *1: sheet floated (could not be measured). | | | | | |

[Example 3]

42 Parts by mass of the ethylene/vinyl acetate copolymer (A1) and 58 parts by mass of the high-density polyethylene (B1) were melt-kneaded together by using the 65 mm$\phi$ extruder at 200°C to obtain the adhesive resin composition.
By using a multilayer extrusion cast molding machine (40 mm$\phi$ x 3), the low-density polyethylene (Mirason 16SPO used in Comparative Example 1) was extruded as a substrate layer and the above composition was extruded as an adhesive layer onto a PET parting film, which was, then, cut into a film of a predetermined size. The parting film was peeled off, and a sample film was obtained (film constitution: low-density polyethylene/low-density polyethylene/ adhesive resin composition = 20/20/20 $\mu$m; total thickness, 60 $\mu$m).
The sample film was evaluated for its properties to obtain the results as shown in Table 2.

[Comparative Example 4]

A sample film (film constitution: low-density polyethylene/low-density polyethylene/ethylene·vinyl acetate copolymer (A5) = 20/20/20 $\mu$m, total thickness, 60 $\mu$m) was obtained in the same manner as in Example 3 but using an ethylene/vinyl acetate copolymer (A5) instead of using the adhesive resin composition of Example 3.
The sample film was evaluated for its properties concerning the items shown in Table 2. The evaluated results were as shown in Table 2.
Table 2

| Example (Comp. Ex.) | Ex. 3 | Comp. Ex. 4 |
|---|---|---|
| Adhesive properties | | |
| Initial adhesive force (g/25 mm) | 14 | 11 |
| Adhesive force after aging (aging condition 2) | 14 | 23 |
| Ratio of increase (%) | 0 | 109 |

(continued)

| Example (Comp. Ex.) | Ex. 3 | Comp. Ex. 4 |
|---|---|---|
| Adhesive properties | | |
| Adhesive force after aging (aging condition 5) | 13 | 31 |
| Ratio of increase (%) | -8 | 182 |

The film obtained in Example 3 exhibited excellent optical properties and possessed transparency nearly comparable to that of the film of Comparative Example 4.

Even after aging for extended periods of time, floating or fouling to the acrylic board was not confirmed by eyes.

In the film obtained in Example 3, further, the substrate and the adhesive layer were firmly adhered together and were not easily peeled off from each other.

From Tables 1 and 2, it can be learned that the adhesive films of the above embodiments exhibit proper initial adhesive strengths to the article (acrylic board in this case) of which the surface is to be protected, and their increase in the adhesive strength is suppressed to be very small compared to the conventional counterparts.

[Example 4]

42 Parts by mass of the ethylene/vinyl acetate copolymer (A1) and 58 parts by mass of a propylene copolymer (B2) were melt-kneaded together by using a 65 mm$\phi$ single extruder at 200°C to obtain an adhesive resin composition.

By using an extrusion cast molding machine (40 mm$\phi$), the resin composition was extruded onto a PET parting film, which was cut into a film of a predetermined size. The parting film was peeled off, and a sample film was obtained (total thickness, 90 $\mu$m).

The sample film was evaluated for its properties concerning the items shown in Table 3. The evaluated results were as shown in Table 3.

[Example 5]

42 Parts by mass of the ethylene/vinyl acetate copolymer (A1) and 58 parts by mass of a polypropylene polymer (B3) were melt-kneaded together by using the same apparatus under the same conditions as those of Example 4 to obtain an adhesive resin composition.

The resin composition was extruded onto the PET parting film in the same manner as in Example 4, and was cut into a film of a predetermined size. The parting film was peeled off, and a sample film was obtained (total thickness, 90 $\mu$m).

The sample film was evaluated for its properties in the same manner as in Example 4. The results were as shown in Table 3.

[Example 6]

36 Parts by mass of the ethylene/vinyl acetate copolymer (A1), 14 parts by mass of the ethylene/vinyl acetate copolymer (A2) and 50 parts by mass of the propylene copolymer (B2) were melt-kneaded together by using the same apparatus under the same conditions as those of Example 4 to obtain an adhesive resin composition (total content of the vinyl acetate of 10% by mass in the composition).

The resin composition was extruded onto the PET parting film in the same manner as in Example 4, and was cut into a film of a predetermined size. The parting film was peeled off, and a sample film was obtained (total thickness, 90 $\mu$m).

The sample film was evaluated for its properties in the same manner as in Example 4. The results were as shown in Table 3.

[Example 7]

70 Parts by mass of the ethylene/vinyl acetate copolymer (A3) and 30 parts by mass of the propylene copolymer (B2) were melt-kneaded together by using the same apparatus under the same conditions as those of Example 1 to obtain an adhesive resin composition (total content of the vinyl acetate of 10% by mass in the composition).

The resin composition was extrusion-formed, and was cut into a film of a predetermined size to obtain a sample film (total thickness, 90 $\mu$m).

The sample film was evaluated for its properties in the same manner as in Example 4. The results were as shown in Table 3.

[Comparative Example 5]

There was used the same low-density polyethylene (trade name, Mirason 16SPO produced by Prime Polymer Co.) as the one used in Comparative Example 1 instead of the propylene copolymer (B2) used in Example 4. 58 Parts by mass of the above low-density polyethylene and 42 parts by mass of the ethylene/vinyl acetate copolymer (A1) were mixed together, and were melt-kneaded together by using the same apparatus under the same conditions as those of Example 4 to obtain an adhesive resin composition.

The resin composition was extruded onto the PET parting film in the same manner as in Example 4, and was cut into a film of a predetermined size. The parting film was peeled off, and a sample film was obtained (total thickness, 90 $\mu$m).

The sample film was evaluated for its properties in the same manner as in Example 4. The results were as shown in Table 3.

[Comparative Example 6]

The low-density polyethylene used in Comparative Example 5 was extruded onto the PET parting film in the same manner as in Example 4, and was cut into a film of a predetermined size. The parting film was peeled off, and a sample film was obtained (total thickness, 90 $\mu$m).

The sample film was evaluated for its properties in the same manner as in Example 4. The results were as shown in Table 3.

Table 3

| Example (Comp. Ex.) | Ex. 4 | Ex. 5 | Ex. 6 | Ex. 7 | Comp. Ex. 5 | Comp. Ex. 6 |
|---|---|---|---|---|---|---|
| Adhesive properties | | | | | | |
| Initial adhesive force (g/25 mm) | 1.3 | 2.7 | 1.4 | 2 | 3.7 | 3.9 |
| Adhesive force after aging (g/25 mm) | 1.3 | 3.7 | 1.4 | 2.3 | 7.2 | 2.1 |
| (Aging condition 1) Ratio of increase (%) | 0 | 37 | 0 | 15 | 95 | -46 |
| Optical properties | | | | | | |
| Transmission factor for all light rays (%) | 94.5 | 94.5 | 94.2 | 93.9 | 91.1 | 93.6 |
| Haze (%) | 0.9 | 1.2 | 1.2 | 1.3 | 4 | 1.3 |
| Gloss (%) | 125 | 118 | 124 | 128 | 122 | 134 |

In Comparative Example 6, the film was observed to be partly floating after aging.

[Example 8]

42 Parts by mass of an ethylene/butyl acrylate copolymer (A4) and 58 parts by mass of the propylene copolymer (B2) were melt-kneaded together by using the same apparatus under the same conditions as those of Example 4 to obtain an adhesive resin composition.

The resin composition was extruded onto the PET parting film in the same manner as in Example 4, and was cut into a film of a predetermined size. The parting film was peeled off, and a sample film was obtained (total thickness, 60 $\mu$m).

The sample film was evaluated for its properties in the same manner as in Example 4. The results were as shown in Table 4.

[Example 9]

40 Parts by mass of the ethylene/vinyl acetate copolymer (A1) and 60 parts by mass of the propylene copolymer (B2) were mixed together. To 100 parts by mass of the mixed composition, there was, further, added 0.3 parts by mass of a tackifier [hydrogenated aromatic hydrocarbon resin; softening point of 115°C as measured by the ring and ball test). The mixture was melt-kneaded together by using the same apparatus under the same conditions as those of Example 4 to obtain an adhesive resin composition.

The resin composition was extruded onto the PET parting film in the same manner as in Example 4 and was cut into a film of a predetermined size. Thereafter, the parting film was peeled off, and a sample film was obtained (total thickness, 60 $\mu$m).

The sample film was evaluated for its properties in the same manner as in Example 4. The results were as shown in Table 4.

[Example 10]

14 Parts by mass of the ethylene/vinyl acetate copolymer (A1) and 86 parts by mass of the propylene copolymer (B2) were melt-kneaded together by using the 65 mm$\phi$ single extruder at 200°C to obtain an adhesive resin composition.

The resin composition was extruded onto the PET parting film in the same manner as in Example 4, and was cut into a film of a predetermined size. The parting film was peeled off, and a sample film was obtained (total thickness, 60 $\mu$m).

The sample film was evaluated for its properties. The evaluated results were as shown in Table 4.

Table 4

| Example | Ex. 8 | Ex. 9 | Ex. 10 |
|---|---|---|---|
| Adhesive properties | | | |
| Initial adhesive force (g/25 mm) | 2.2 | 3.9 | 1.1 |
| Adhesive force after aging (g/25 mm) (aging condition 1) | 2.2 | 4 | - |
| Ratio of increase (%) | 0 | 3 | - |
| Adhesive force after aging (g/25 mm) (aging condition 2) | 2.4 | 4.9 | 1.2 |
| Ratio of increase (%) | 9 | 26 | 9 |
| Adhesive force after aging (g/25 mm) (aging condition 3) | - | - | 1.1 |
| Ratio of increase (%) | - | - | 0 |
| Optical properties | | | |
| Transmission factor for all light rays (%) | 94.3 | 94.3 | 94.3 |
| Haze (%) | 1.3 | 1.1 | 1.1 |
| Gloss (%) | 116 | 115 | 116 |

[Example 11]

42 Parts by mass of the ethylene/vinyl acetate copolymer (A1) and 58 parts by mass of the propylene copolymer (B2) were melt-kneaded together by using the 65 mm$\phi$ single extruder at 200°C to obtain an adhesive resin composition.

By using the multilayer extrusion cast molding machine (40 mm$\phi$ x 3), the low-density polyethylene (trade name, Mirason 16SPO) used in Comparative Example 5 was extruded as a substrate and the above composition was extruded as an adhesive layer onto the PET parting film, which was, then, cut into a film of a predetermined size. The parting film was peeled off, and a sample film was obtained (film constitution: low-density polyethylene/low-density polyethylene/ adhesive resin composition = 20/20/20 $\mu$m, total thickness, 60 $\mu$m).

The sample film was evaluated for its properties. The evaluated results were as shown in Table 5.

[Comparative Example 7]

A sample film (film constitution: low-density polyethylene/low-density polyethylene/ethylene·vinyl acetate copolymer (A5) = 20/20/20 $\mu$m, total thickness, 60 $\mu$m) was obtained in the same manner as in Example 11 but using an ethylene/vinyl acetate copolymer (A5) instead of using the adhesive resin composition of Example 11.

The sample film was evaluated for its properties. The evaluated results were as shown in Table 5.

Table 5

| Example (Comp. Ex.) | Ex. 11 | Comp. Ex. 7 |
|---|---|---|
| Adhesive properties | | |
| Initial adhesive force (g/25 mm) | 3.2 | 10.5 |
| Adhesive force after aging (g/25 mm) (aging condition 2) | 3.3 | 22.8 |
| Ratio of increase (%) | 3 | 117 |
| Adhesive force after aging (g/25 mm) (aging condition 4) | 3.5 | 33.6 |
| Ratio of increase (%) | 9 | 220 |
| Optical properties | | |
| Transmission factor for all light rays (%) | 94.1 | 93.9 |

In the films of Example 11 and Comparative Example 7, the substrate and the adhesive layer were so strongly adhered together that they could not be peeled off from each other by hand.
The samples after aging of Examples 4 to 11 did not reveal any fouling from the adhesive compositions on the acrylic boards which, therefore, maintained transparency.
Besides, no film floated after aging unlike that of Comparative Example 6.

From Tables 3, 4 and 5, it is learned that the adhesive films or the laminated adhesive films of the embodiments of the invention initially adhere to the article (acrylic board in this case) of which the surface is to be protected maintaining sufficiently practicable and proper strengths while greatly suppressing an increase in the adhesiveness as compared to the conventional counterparts and, further, exhibit optical properties which are comparable to or superior to those of the conventional counterparts.

Fine texture structures of Examples 1 to 11 were observed in a manner as described below.
Sample films obtained in Examples were thinly cut in the machine direction, dyed with osmium oxide ($OsO_4$) and was pretreated by depositing carbon thereon. The pretreated sample pieces were observed by using a scanning electron microscope (STEM), Model S-4700 (equipped with a transmission electron detector) manufactured by Hitachi, Ltd. with an applied voltage of 20 KV.
As a result of observation, the mixed resin layer possessed a fine texture structure in which lamellar phases of the resin (A) were overlapped one upon the other in many layers among the continuous phases in which the ethylene/unsaturated ester copolymer resin (A) was homogeneously dissolved in the resin of the ethylene or propylene (co)polymer (B). For reference, a microphotograph of Example 7 is attached as Fig. 1.

**Claims**

1. A laminated film or sheet obtained by forming an adhesive film or sheet of a mixed resin consisting of

   (A) an ethylene/unsaturated ester copolymer resin,
   (B) a highly crystalline ethylene or propylene polymer or copolymer resin having a melting point of not lower than 115°C.
   and optionally (C) a tackifier selected from the group consisting of petroleum resins, namely aliphatic resins, aromatic resins, aliphatic/aromatic copolymer resins and alicyclic resins; and pinene resins; cumarone-indene resins; terpene resins; terpene-phenol resins; polymerized rosin resins; (alkyl)phenol resins; xylene resins; and hydrogenated resins thereof,

   on at least one surface of a substrate.

2. The laminated film or sheet of claim 1, wherein said resin (A) comprises an ethylene/vinyl acetate copolymer or an ethylene/alkyl (meth)acrylate copolymer.

3. The laminated film or sheet of claim 1, wherein said resin (B) comprises a stereospecific propylene polymer having a melting point of not lower than 130°C.

4. The laminated film or sheet of claim 3, wherein said mixed resin comprises 5 to 80% by mass of said resin (A) and 95 to 20% by mass of said resin (B) relating to the sum of resin (A) and resin (B).

5. The laminated film or sheet of claim 1, wherein said resin (B) comprises a high-density polyethylene having a density of 940 to 965 $kg/_m{}^3$.

6. The laminated film or sheet of claim 5, wherein said mixed resin comprises 10 to 70% by mass of said resin (A) and 90 to 30% by mass of said resin (B) relating to the sum of resin (A) and resin (B).

7. The laminated film or sheet of claim 1, wherein the mixed resin adhesive film layer has a fine texture structure in which lamellar phases of the resin (A) are overlapped one upon the other in many layers among the continuous phases in which the resin (A) is homogeneously dissolved in said resin (B).

8. The laminated film or sheet of claim 1, wherein a blending amount of said tackifier in the mixed resin is 0 to 30% per mass based on the sum of resins (A) and (B).

9. The laminated film or sheet of any one of claims 1 to 8, wherein the substrate comprises a polyethylene or a polypropylene, and said adhesive film is formed on at least one surface thereof.

10. A surface protection film or sheet comprising the laminated film or sheet of any one of claims 1 to 9.


**Patentansprüche**

1. Schichtfilm oder -folie, erhalten durch Ausbildung eines Klebefilms oder einer Klebefolie aus einem Harzgemisch, bestehend aus

   (A) einem Ethylen/ungesättigtes Ester-Copolymer-Harz,
   (B) einem hoch kristallinen Ethylen- oder Propylen-Polymer- oder -Copolymer-Harz, dessen Schmelzpunkt nicht unter 115° C liegt,
   und optional (C) einem Klebrigmacher, ausgewählt aus der Gruppe bestehend aus Erdölharzen, nämlich aliphatischen Harzen, aromatischen Harzen, aliphatischen/aromatischen Copolymer-Harzen und alicyclischen Harzen; und Pinen-Harzen; Cumaron-Inden-Harzen; Terpen-Harzen; Terpen-Phenol-Harzen; Harzen aus polymerisiertem Kolophonium; (Alkyl)-phenol-Harzen; Xylen-Harzen; und hydrierten Harzen derselben,

   auf mindestens einer Oberfläche eines Substrats.

2. Schichtfilm oder -folie nach Anspruch 1, wobei das Harz (A) ein Ethylen/Vinylacetat-Copolymer oder ein Ethylen/Alkyl(meth)acrylat-Copolymer umfasst.

3. Schichtfilm oder -folie nach Anspruch 1, wobei das Harz (B) ein stereospezifisches Propylen-Polymer umfasst, dessen Schmelzpunkt nicht unter 130° C liegt.

4. Schichtfilm oder -folie nach Anspruch 3, wobei das Harzgemisch 5 bis 80 Gew.-% des Harzes (A) und 95 bis 20 Gew.-% des Harzes (B), bezogen auf die Summe von Harz (A) und Harz (B), umfasst.

5. Schichtfilm oder -folie nach Anspruch 1, wobei das Harz (B) ein Polyethylen hoher Dichte mit einer Dichte von 940 bis 965 $kg/m^3$ umfasst.

6. Schichtfilm oder -folie nach Anspruch 5, wobei das Harzgemisch 10 bis 70 Gew.-% des Harzes (A) und 90 bis 30 Gew.-% des Harzes (B), bezogen auf die Summe von Harz (A) und Harz (B), umfasst.

7. Schichtfilm oder -folie nach Anspruch 1, wobei die Harzgemisch-Klebefilmschicht eine fein texturierte Struktur aufweist, in der lamellare Phasen des Harzes (A) einander inmitten der zusammenhängenden Phasen, in denen das Harz (A) homogen im Harz (B) gelöst ist, in vielen Schichten überlappen.

8. Schichtfilm oder -folie nach Anspruch 1, wobei eine Zumischmenge des Klebrigmachers in dem Harzgemisch 0 bis 30 Gew.-%, basierend auf der Summe der Harze (A) und (B), beträgt.

9. Schichtfilm oder -folie nach einem der Ansprüche 1 bis 8, wobei das Substrat ein Polyethylen oder ein Polypropylen umfasst und der Klebefilm auf mindestens einer Oberfläche desselben ausgebildet ist.

10. Oberflächenschutzfilm oder -folie, umfassend den Schichtfilm oder die Schichtfolie nach einem der Ansprüche 1 bis 9.

**Revendications**

1. Film laminé ou feuille laminée obtenu(e) en formant un film adhésif ou une feuille adhésive d'une résine mixte constituée

   (A) d'une résine de copolymère d'éthylène/ester insaturé,
   (B) d'une résine de polymère ou de copolymère d'éthylène ou de propylène très cristallin ayant un point de fusion non inférieur à 115 °C,
   et en option (C) un agent collant sélectionné parmi le groupe constitué de résines de pétrole, à savoir des résines aliphatiques, des résines aromatiques, des résines de copolymères aliphatiques/aromatiques et des résines alicycliques ; et des résines de pinène ; des résines de coumarone-indène ; des résines de terpène ; des résines de terpène-phénol ; des résines de rosine polymérisée ; des résines d'(alkyl)phénol ; des résines de xylène ; et leurs résines hydrogénées,

   sur au moins une surface d'un substrat.

2. Film laminé ou feuille laminée selon la revendication 1, dans lequel/laquelle ladite résine (A) comprend un copolymère d'acétate d'éthylène/vinyle ou un copolymère de (méth)acrylate d'éthylène/alkyle.

3. Film laminé ou feuille laminée selon la revendication 1, dans lequel/laquelle ladite résine (B) comprend un polymère de propylène stéréospécifique ayant un point de fusion non inférieur à 130 °C.

4. Film laminé ou feuille laminée selon la revendication 3, dans lequel/laquelle ladite résine mixte comprend 5 à 80 %-masse de ladite résine (A) et 95 à 20 %-masse de ladite résine (B) par rapport à la somme de la résine (A) et de la résine (B).

5. Film laminé ou feuille laminée selon la revendication 1, dans lequel/laquelle ladite résine (B) comprend un polyéthylène haute densité ayant une densité de 940 à 965 kg/m$^3$.

6. Film laminé ou feuille laminée selon la revendication 5, dans lequel/laquelle ladite résine mixte comprend 10 à 70 %-masse de ladite résine (A) et 90 à 30 %-masse de ladite résine (B) par rapport à la somme de la résine (A) et de la résine (B).

7. Film laminé ou feuille laminée selon la revendication 1, dans lequel/laquelle la couche de film adhésif àrésine mixte a une structure de texture fine dans laquelle des phases lamellaires de la résine (A) se chevauchent les unes les autres en couches nombreuses parmi les phases continues dans lesquelles la résine (A) est dissoute de façon homogène dans ladite résine (B).

8. Film laminé ou feuille laminée selon la revendication 1, dans lequel/laquelle une quantité de mélange dudit agent collant dans la résine mixte est de 0 à 30 %-masse sur la base de la somme desrésines (A) et (B).

9. Film laminé ou feuille laminée selon l'une quelconque des revendications 1 à 8, dans lequel/laquelle le substrat comprend un polyéthylène ou un polypropylène, et ledit film adhésif est formé sur au moins une surface de celui-ci.

10. Film ou feuille de protection de surface, comprenant le film laminé ou la feuille laminéeselon l'une quelconque des revendications 1 à 9.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8170056 A
- JP 2002226814 A
- WO 2005075556 A
- EP 2241603 A